# EUROPÄISCHE PATENTSCHRIFT

(11) **EP 2 740 196 B1**
(45) Veröffentlichungstag und Bekanntmachung des Hinweises auf die Patenterteilung: **14.06.2017**
(21) Anmeldenummer: 12769960.1
(22) Anmeldetag: 05.09.2012
(51) Int. Cl.: H02K 55/02, H02K 55/04, H02K 9/20, F17C 5/04

(54) **KÜHLEINRICHTUNG FÜR EINEN SUPRALEITER EINER SUPRALEITENDEN DYNAMOELEKTRISCHEN SYNCHRONMASCHINE**
COOLING DEVICE FOR A SUPERCONDUCTOR OF A SUPERCONDUCTIVE SYNCHRONOUS DYNAMOELECTRIC MACHINE
DISPOSITIF DE REFROIDISSEMENT POUR UN SUPRACONDUCTEUR D'UNE MACHINE SYNCHRONE DYNAMOÉLECTRIQUE SUPRACONDUCTRICE

(30) Priorität: 12.10.2011 DE 102011084324
(43) Veröffentlichungstag der Anmeldung: 11.06.2014
(73) Patentinhaber: Siemens Aktiengesellschaft, 80333 München (DE)
(72) Erfinder: HÖSLE, Markus, 91058 Erlangen (DE)
(86) Internationale Anmeldenummer: PCT/EP2012/067324
(87) Internationale Veröffentlichungsnummer: WO 2013/053548

(56) Entgegenhaltungen:
- EP-A2- 0 829 694
- GB-A- 945 624
- JP-A- 2004 294 001
- US-A1- 2007 095 075
- US-A1- 2009 229 291
- US-A1- 2010 038 980

## Beschreibung

Die Erfindung betrifft eine Kühleinrichtung für einen Supraleiter, insbesondere Hochtemperatursupraleiter einer dynamoelektrischen Synchronmaschine, mit einem Kühlkreislauf für ein Kühlmedium, wobei das in einem Kaltkopf mit einem Kondensor verflüssigte Kühlmedium zu dem zu kühlenden Supraleiter geleitet und gasförmig zurück zu dem Kondensor geführt wird.

Außerdem betrifft die Erfindung eine supraleitende dynamoelektrische Synchronmaschine, insbesondere zum Einsatz in Fluggeräten wie Flugzeuge und Hubschrauber, auf Seefahrzeugen oder Traktionsfahrzeugen, wie Schienenfahrzeuge oder Mining-Trucks.

In supraleitenden dynamoelektrischen Synchronmaschinen ist wenigstens eine supraleitende Wicklung, vorzugsweise im Rotor der supraleitenden dynamoelektrischen Synchronmaschine vorgesehen. Dabei wird häufig ein sogenannter Hochtemperatursupraleiter (HTS-Supraleiter) eingesetzt. HTS-Supraleiter nennt man metalloxidische Supraleitermaterialien mit Sprungtemperaturen Tc von über 77K.

Für die Kühlung von Supraleitern, auch in supraleitenden elektrischen Maschinen, werden kryogene Flüssigkeiten als Kühlmedium eingesetzt. Es sind beispielsweise HTS-Supraleiter Kühleinrichtungen bekannt, bei denen in einem geschlossenen System, beispielsweise Neongas oder Stickstoff als Kühlmedium an einem Kaltkopf mit Kondensor verflüssigt wird. Von dort aus fließt das Kühlmedium in das den Supraleiter tragende Bauteil, beispielsweise einen zu kühlenden Rotor einer dynamoelektrischen Synchronmaschine. Das dort verdampfende Kühlmedium gelangt zum Kondensor. Das flüssige Kühlmedium verdampft an einem den Supraleiter tragenden wärmeleitenden Träger, insbesondere einem Wicklungsträger des Rotors, und strömt gasförmig aufgrund des Druckunterschiedes, der aufgrund des Verdampfens im Verdampfer und des Kondensierens im Kondensorraum des Kondensors entsteht, zum Kondensor zurück. Der Transport des flüssigen Kühlmediums zu dem Supraleiter wird bei den bekannten Kühleinrichtungen durch Schwerkraft bewerkstelligt. Das bedeutet zwangsläufig, dass der Kondensor geodätisch höher als der Verdampfer, also als der Rotor angeordnet ist. Insgesamt wird dabei ein geschlossenes Kühlsystem gebildet.

Dies ist beispielsweise der EP 1 437 821 B1 als auch prinzipiell der JP 57095151 A zu entnehmen.

Dieses Kühlverfahren erweist sich aber dann als unzuverlässig, wenn eine Schräglage dieser Kühleinrichtung bzw. der zu kühlenden Synchronmaschine auftritt, wie es beispielsweise bei supraleitenden Synchronmaschinen in Flugzeugen, Schiffsanwendungen oder Traktionsfahrzeugen durchaus im Normalbetrieb auftreten kann. Dabei sollen diese Synchronmaschinen dort beispielsweise als Antrieb oder als Generator eingesetzt werden.

Der Druck des Kühlmediums wird in US2009229291 durch einen Kompressor geregelt. Zur Aufrechterhaltung des Drucks bei Neigungen schlägt US2009229291 eine Lagerung des Kühlmittelbehälters und US2009229291 das Anbringen von Lagesensoren an die elektrische Maschine vor.

Bei diesen Verkehrmitteln stellen sich beispielsweise Schräglagen durch Steigungen, Kurvenfahrten etc. ein. Bei derartigen Schräglagen besteht die Gefahr, dass nach dem Stand der Technik das flüssige Kühlmedium nicht mehr in den Verdampfer gelangt und die erforderliche Kühlleistung nicht mehr gewährleistet ist.

Ausgehend davon, liegt der Erfindung die Aufgabe zugrunde, eine Kühleinrichtung für einen Supraleiter, insbesondere eine supraleitende dynamoelektrische Synchronmaschine anzugeben, die auf verlässliche Art und Weise das Kühlmedium zu dem zu kühlenden Supraleiter transportiert, den Kühlkreislauf aufrecht erhält, ohne dabei auf die Gravitationswirkung angewiesen zu sein und damit den entsprechenden Einschränkungen im Betrieb der dynamoelektrische Synchronmaschine unterworfen zu sein.

Die Lösung der gestellten Aufgabe gelingt erfindungsgemäß nach Anspruch 1 dadurch, dass zur Förderung des Kühlmediums in den zu kühlenden Supraleiter, das Kühlmedium mit einem Druck beaufschlagt wird.

Erfindungsgemäß wird also vorgeschlagen, die Kühleinrichtung des Supraleiters mit einem Druck zu versehen, der im Abschnitt zwischen dem Kondensor und dem zu kühlenden Supraleiter zumindest abschnittsweise wirksam ist und betriebsmäßig derart ausgestaltet ist, dass das Kühlmedium mit Druck beaufschlagt wird, der das Kühlmedium zu dem zu kühlenden Supraleiter fördert. Auf diese Weise ist es möglich, das flüssige Kühlmedium ohne Ausnutzung der Schwerkraft, also unabhängig von der Lage des Kondensors, zu dem zu kühlenden Supraleiter, insbesondere in den Rotor einer supraleitenden Synchronmaschine zu fördern. Ausgenutzt wird dabei der Druck einer mechanischen Feder oder einer Gasfeder, die jeweils über einen Stempel in einem Speicherbehältnis einen Druck auf das Kühlmedium ausübt und somit das Kühlmedium in den Supraleiter fördert.

Eine derartige Versorgung des Supraleiters durch ein Kühlmedium ist unabhängig von der Lage der Kühleinrichtung und ist somit für sämtliche Einsatzarten geeignet.

Die Menge an flüssigem Kühlmedium kann über den Druck flexibel bestimmt werden und der Kondensor muss nicht mehr zwingend geodätisch höher als das zu kühlende Bauteil angeordnet werden. Dabei wird ein durch einen ersten Leitungsabschnitt mit dem Kondensor und durch einen zweiten Leitungsabschnitt mit dem zu kühlenden Supraleiter tragenden, als Verdampfer wirkenden Bauteil, insbesondere den Rotor, verbundenes Speicherbehältnis für flüssiges Kühlmedium vorgesehen, an das die Wärmequelle angekoppelt ist. In dem Speicherbehältnis wird ein Druck auf das flüssige Kühlmedium ausgeübt, so dass das Kühlmedium aus dem Speicherbehältnis zu dem Supraleiter hingefördert wird.

Dies gestattet, den zweiten Leitungsabschnitt als Steigrohr auszubilden. Das Kühlmedium kann somit auch gegen die Schwerkraft in den Supraleiter gefördert werden und den Kühlkreislauf aufrecht erhalten.

Somit liefert nicht die Schwerkraft die fördernde Kraft für das Kühlmedium, sondern gestattet es nunmehr, dass der zweite Leitungsabschnitt zumindest abschnittsweise flexibel ausgeführt ist. Damit muss dieser zweite Leitungsabschnitt also kein starres Rohr beinhalten, sondern es ist möglich, dass der zweite Leitungsabschnitt als Wellschlauch ausgebildet ist, durch den das flüssige Kühlmedium aufgrund des Drucks im Speicherbehältnis in den zu kühlenden Supraleiter strömt.

In einer weiteren Ausgestaltung der vorliegenden Erfindung ist dem Speicherbehältnis kondensorseitig ein Ventil vorgeschaltet. Um den Aufbau besonders einfach zu gestalten, handelt es sich dabei um ein Rückschlagventil.

Das Ventil dient dazu, den vom Speicherbehältnis aus in beide Leitungsabschnitte drängenden Druck bei geschlossenem Ventil auf den zweiten Leitungsabschnitt in Richtung des zu kühlenden Bauteils, als des Supraleiters, zu richten, um dort eine effektive Kühlung zu erreichen.

Grundsätzlich ist es selbstverständlich möglich, auch ein elektrisch oder hydraulisch gesteuertes Ventil im kondensorseitigen Leitungsabschnitt zu verwenden.

Vorzugsweise kann bei Verwendung eines die Gravitationskräfte nutzenden Rückschlagventils dieses Rückschlagventil in dem aufsteigenden, dem Speicherbehältnis benachbarten Teil eines siphonähnlichen Leitungsabschnitts des ersten Leitungsteils angeordnet sein. Es werden dabei beispielsweise Rückschlagventile verwendet, die auf eine der Gravitation ausgesetzten Last, beispielsweise einer in dem Rückschlagventil vorgesehenen Kugel oder Kegel, wirken. Der Leitungsabschnitt zum Speicherbehältnis wird folglich siphonähnlich ausgebildet und das Rückschlagventil wird in dem ansteigenden Leitungsteil kurz vor dem Speicherbehältnis angeordnet.

Über eine mechanische Feder oder ein Gasdruckfeder wird dabei in dem Speicherbehältnis über einen Stempel auf das Kühlmedium ein vorgebbarer Druck ausgeübt, der das Kühlmedium über den zweiten Leitungsabschnitt in den Supraleiter drückt. Der dafür vorgesehene Stempel innerhalb des Speicherbehältnisses bewegt sich insbesondere zwischen zwei Endlagen, so dass sich im Betriebsverlauf der Kühleinrichtung 22 ein zyklischer Betrieb einstellt, der aber nicht zwangsläufig periodisch stattfinden muss.

Der Kühlvorgang kann zweckmäßigerweise ebenso durch eine Regelung stattfinden, dabei wird über die Temperatur am Supraleiter und/oder dem Füllstand des Speicherbehältnisses geregelt. Dafür sind entsprechende Sensoren, beispielsweise Temperatursensoren im Supraleiter und/oder Füllstandssensoren im Speicherbehältnis und Endlagenschalter des Stempels vorhanden, deren Daten einer Steuereinrichtung zugeführt werden. Diese Steuereinrichtung entscheidet, ob ein dementsprechender Druck innerhalb des Speicherbehältnisses über den Stempel aufgebaut werden muss oder ob ggf. der Gasdruck der Gasfeder oder eine Spannung der Feder vorgenommen werden muss.

Entscheidend dabei ist, dass die Kühleinrichtung eine vorgebbare Zeit, auch bei Ausfall der Steuereinrichtung den Kühlkreislauf aufrechterhalten kann. Dies wird erreicht, indem die vorgespannte Feder oder Gasdruckfeder aufgrund ihrer gespeicherten Energien auch bei Ausfall der Steuereinrichtung das Kühlmedium im Speicherbehältnis unter Druck halten und somit eine Kühlwirkung des Supraleiters garantieren.

Neben der Kühleinrichtung betrifft die vorliegende Erfindung auch eine supraleitende Synchronmaschine, insbesondere eine HTS-Synchronmaschine, vor allem zum Einsatz in Fluggeräten, wie z.B. Flugzeugen oder Hubschraubern, ebenso wie zum Einsatz auf Seefahrzeugen als auch für Traktionseinrichtungen im Straßenverkehr oder Schienenverkehr oder bei Mining Trucks mit einer erfindungsgemäßen Kühleinrichtung. Bei der Förderung des Kühlmediums innerhalb dieser Kühleinrichtung und dem zu kühlenden Supraleiter wurde auf Gravitationseinflüsse weitgehend verzichtet, so dass die Auswirkungen von Schräglagen der erfindungsgemäßen Kühleinrichtung in derartigen Verkehrsmitteln auf deren Wirksamkeit vernachlässigbar sind. Eine dynamoelektrische Synchronmaschine, die mit einer erfindungsgemäßen Kühleinrichtung versehen ist, kann also besonders vorteilhaft auf den oben genannten Fahrzeugen als Generator oder Motor eingesetzt werden. Bei diesen und bei anderen Anwendungen, bei denen aufgrund möglicher Schräglagen zur Schwerkraft eine Förderung durch die Gravitation unsicher erscheint, kann die erfindungsgemäße Kühleinrichtung genauso eingesetzt werden wie in Anwendungen, in denen bauliche Beschränkungen einen höher als der den Verdampfungsraum stellender Rotor angeordneter Kondensor nicht realisiert werden kann.

Sämtliche Ausführungen bezüglich der erfindungsgemäßen Kühleinrichtung lassen sich analog auf die erfindungsgemäße dynamoelektrische Synchronmaschine übertragen, so dass auch hiermit die genannten Vorteile erreicht werden können.

Die Erfindung sowie weitere vorteilhafte Ausgestaltungen der Erfindung werden anhand prinzipiell dargestellter Ausführungsbeispiele näher erläutert; darin zeigt:
- FIG 1: Kühleinrichtung einer Synchronmaschine,
- FIG 2: Speicherbehältnis einer Kühleinrichtung.

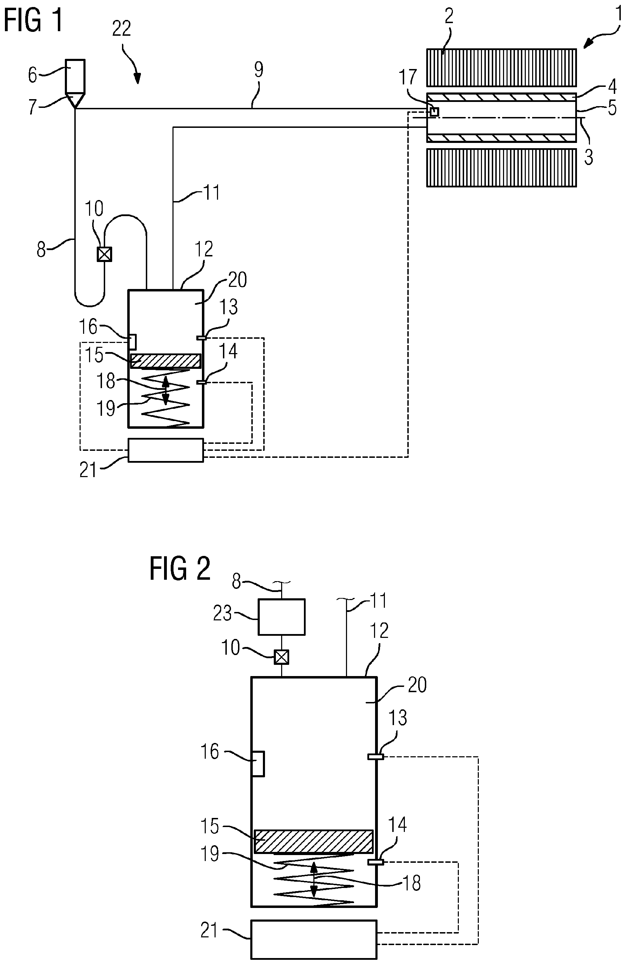

FIG 1 zeigt eine prinzipielle Darstellung einer erfindungsgemäßen Kühleinrichtung 22, die einer in einem Fahrzeug betriebenen elektrodynamischen Synchronmaschine 1 zugeordnet ist, um innerhalb eines relativ zu einem Stator 2 um eine Achse 3 drehbaren Rotors 5 angeordnete supraleitende Wicklung 4 zu kühlen. Die Wicklungen 4 sind aus einem Hochtemperatursupraleiter gefertigt und werden von einem thermisch leitfähigen Wicklungsträger gehalten, der in einem Vakuumgehäuse angeordnet ist und dessen innere Begrenzungen einem im Wesentlichen zylindrischen, sich in Achsrichtung erstreckenden Innenraum bilden.

In diesem Ausführungsbeispiel wird Neongas als Kühlmedium zur Kühlung des Supraleiters in dem Rotor 5 verwendet, das in einem geschlossenen Kühlkreislauf bewegt wird. In einem Kondensorraum eines Kondensors 7, der thermisch mit einem Kaltkopf 6, der thermisch, wie grundsätzlich bekannt, an eine Kältemaschine gekoppelt ist, verbunden ist, wird ein gasförmiges Kühlmedium verflüssigt. Dieses flüssige Kühlmedium wird nun über einen ersten Leitungsabschnitt 8 in ein Speicherbehältnis 12 und von dort über einen zweiten Leitungsabschnitt 11 zu den supraleitenden Wicklungen 4 im Rotor 5 geführt. Dabei erfolgt die Einleitung des flüssigen Kühlmediums in den Rotor 5 in an sich bekannter Art und Weise.

Die Kühlwirkung erfolgt, in dem das Kühlmedium an dem Wicklungsträger verdampft und somit die Wicklungen 4 kühlt. Der Innenraum des Rotors 5 wirkt also in dieser Hinsicht als Verdampfungsraum. Das Kühlmedium wird über eine Rückführleitung 9 wieder zum Kondensor 7 geführt, wo es wieder verflüssigt wird.

Nachdem der Kondensor geodätisch deutlich niedriger angeordnet sein kann als der Rotor 5, und der zweite Leitungsabschnitt 11 als Steigrohr ausgebildet ist, wird bei der Kühleinrichtung 22 nicht die Gravitation als Förderkraft verwendet. Zur Förderung des flüssigen Kühlmediums durch den zweiten Leitungsabschnitt 11 in den Rotor 5 wird vielmehr ein durch einen Stempel 15 erzeugter Druck im Speicherbehältnis 12 benutzt.

Wie FIG 1 zu entnehmen ist, bildet der erste Leitungsabschnitt 8 vor dem Speicherbehältnis 12 einen Siphon, in dessen dem Speicherbehältnis 12 benachbarten, entgegen der Schwerkraft gerichteten Teilabschnitts dieses ersten Leitungsabschnitts 8 ein Rückschlagventil 10 vorgesehen ist. Am in dieser Darstellung unteren Teil des Speicherbehältnis 12 ist eine Vorrichtung angeordnet, die eine mechanische Feder 19 spannt bzw. eine Gasdruckfeder auf einen vorgebbaren Druck einstellt. Im Betrieb der Anlage wirkt nunmehr auf das im Speicherbehältnis 12 befindliche flüssige Kühlmedium ein Druck, der das flüssige Kühlmedium durch den zweiten Leitungsabschnitt 11 in den Innenraum des Rotors 5 führt. Der Weg des Kühlmediums direkt zurück zu dem Kondensor 7 ist durch das Rückschlagventil 9 oder eine nicht näher dargestellte Klappe automatisch geschlossen.

Der Aufbau des Drucks im Speicherbehältnis 12 erfolgt zyklisch, vorteilhafterweise gesteuert von einer Steuereinrichtung 21. Die Steuereinrichtung 21 regelt den Aufbau und Überwachung des Drucks und greift dabei auf Daten von Temperatursensoren 16, 17, auf Lagesensoren 13, 14 und auf Füllstandssensoren innerhalb des Speicherbehältnisses 12 zurück. Dabei stellt sich ein zyklischer Betrieb der Steuereinrichtung 21 ein.

Aufgrund eines zyklischen Druckaufbaus durch die vorgespannte Feder 19 oder eine Gasdruckfeder, ist auch bei Ausfall der elektrischen Versorgung der Steuereinrichtung 21 eine vorgebbare Zeit die Kühlung des Rotors 5 gewährleistet.

Zusätzlich kann die Steuereinrichtung 21 auch durch eine Batterie oder ein Kondensator gepuffert sein, um eine gewisse Zeitspanne zu überbrücken.

Wird also nunmehr durch den Betrieb der Steuereinrichtung 21 ein Druck im Druckraum 20 des Speicherbehältnisses 12 aufgebaut, schließt sich das Rückschlagventil 10 und flüssiges Kühlmedium wird in den Rotor 5 gefördert. Während einer Nichtbetriebsphase der Steuereinrichtung 21 oder eines Nachlassen des Drucks durch die Feder 19 oder die Gasdruckfeder kann sich das Rückschlagventil 10 öffnen und es strömt flüssiges Kühlmedium in den Druckraum 20 des Speicherbehältnisses 12 nach. Statt des Rückschlagventils 10 kann auch ein gesteuertes Ventil verwendet werden, das ebenfalls durch die Steuereinrichtung 21 angesteuert wird.

Der zweite Leitungsabschnitt 11 ist vorzugsweise abschnittsweise flexibel ausgebildet, beispielsweise in Form eines, insbesondere druckfesten Wellenschlauchs, was u.a. die räumliche Gestaltung und Anordnung der Kühleinrichtung, insbesondere bei beengtem Bauraum, erleichtert.

FIG 2 zeigt ein Speicherbehältnis 12 mit einem zwischen Kondensor 7 und Rückschlagventil 10 angeordneten Vorratsbehälter 23. In diesen Vorratsbehälter 23 strömt das aus dem Kondensor 7 strömende Kühlmittel und verbleibt dort solange, bis es in das Speicherbehältnis 12 nachströmen kann. Dies erfolgt beispielsweise dann, wenn die Feder 19 wieder gespannt wird. Dieses Nachströmen erfolgt allgemein, wenn der Druck im Speicherbehältnis 12 geringer als im Vorratsbehälter 23 ist. Damit ist ein Nachströmen aus dem Vorratsbehälter 23 über das Rückschlagventil 10 zum Speicherbehältnis 12 möglich. Der Kondensor 7 ist dabei geodätisch über dem Vorratsbehälter 23 angeordnet.

Ansonsten unterschiedet sich der Aufbau nach FIG 2 nicht von der Kühleinrichtung und dem Aufbau nach FIG 1.

## Patentansprüche

1. Kühleinrichtung (22) für einen Supraleiter, insbesondere Hochtemperatursupraleiter einer Synchronmaschine (1), mit einem Kühlkreislauf für ein Kühlmedium, wobei das in einem Kaltkopf (6) mit einem Kondensor (7) verflüssigte Kühlmedium zu dem zu kühlenden Supraleiter geleitet und gasförmig zurück zu dem Kondensor (7) geführt wird, wobei zur Förderung des Kühlmediums aus einem Speicherbehältnis (12) in den zu kühlenden Supraleiter, das Kühlmedium mit einem Druck beaufschlagt wird, **dadurch gekennzeichnet, dass** der Druck in dem Speicherbehältnis (12) durch eine mechanische Feder (19) oder eine Gasdruckfeder auf einen Stempel (15)erfolgt, der das Kühlmedium unter Druck setzt, wobei eine Steuereinrichtung (21) den Aufbau und Überwachung des Drucks regelt und dabei auf Daten von Temperatursensoren (16,17) auf Lagesensoren (13,14) und auf Füllstandssensoren innerhalb des Speicherbehältnisses (12) zurückgreift.

2. Kühleinrichtung (22) nach Anspruch 1, **dadurch gekennzeichnet, dass** der Druckaufbau in dem Speicherbehältnis zyklisch erfolgt.

3. Kühleinrichtung (22) nach einem der vorhergehenden Ansprüche, **dadurch gekennzeichnet, dass** der Druck im Speicherbehältnis (12) anhand der Temperatur am Supraleiter und/oder dem Füllstand des Speicherbehältnis (12) regelbar ist.

4. Kühleinrichtung (22) nach Anspruch 1, **dadurch gekennzeichnet, dass** zwischen Kondensor (7) und dem zu kühlenden Supraleiter ein Speicherbehältnis (12) vorgesehen ist, das mit einem ersten Leitungsabschnitt (8) mit dem Kondensor (7) und durch einen zweiten Leitungsabschnitt (11) mit dem zu kühlenden Supraleiter verbunden ist, wobei die Druckerzeugung im Speicherbehältnis (12) erfolgt.

5. Kühleinrichtung (22) nach Anspruch 4, **dadurch gekennzeichnet, dass** der zweite Leitungsabschnitt (11) als Steigrohr ausgeführt ist.

6. Kühleinrichtung (22) nach Anspruch 4 oder 5, **dadurch gekennzeichnet, dass** der zweite Leitungsabschnitt (11) wenigstens abschnittsweise flexibel ausgeführt ist.

7. Kühleinrichtung (22) nach einem der vorhergehenden Ansprüche, **dadurch gekennzeichnet, dass** dem Speicherbehältnis (12) zumindest kondensorseitig strömungstechnisch ein Ventil, insbesondere ein Rückschlagventil (10) und/oder einen Vorratsbehälter (23) vorgeschaltet ist.

8. Kühleinrichtung (22) nach einem der vorhergehenden Ansprüche, **dadurch gekennzeichnet, dass** der Kondensor (7) geodätisch niedriger angeordnet ist als der zu kühlende Supraleiter.

9. Supraleitende Synchronmaschine (1), insbesondere zum Einsatz in Fluggeräten, wie Flugzeuge und Hubschrauber, auf Seefahrzeugen oder auf Traktionsfahrzeugen, mit einer Kühleinrichtung nach einem der vorangehenden Ansprüche.

## Claims

1. Cooling device (22) for a superconductor, in particular a high-temperature superconductor of a synchronous machine (1), having a cooling circuit for a coolant, wherein the coolant which is liquefied in a cold head (6) having a condenser (7) is conveyed to the superconductor to be cooled and is returned to the condenser (7) in a gaseous state, wherein the coolant is subjected to a pressure for the purpose of conveying said coolant from a storage container (12) into the superconductor to be cooled, **characterised in that** the pressure in the storage container (12) is exerted by a mechanical spring (19) or a gas spring on a plunger (15) which places the coolant under pressure, wherein a control device (21) regulates the build-up and monitoring of the pressure and refers in this case to data from temperature sensors (16, 17), position sensors (13, 14) and fill-level sensors within the storage container (12).

2. Cooling device (22) according to claim 1, **characterised in that** the pressure build-up in the storage container occurs cyclically.

3. Cooling device (22) according to one of the preceding claims, **characterised in that** the pressure in the storage container (12) can be regulated on the basis of the temperature at the superconductor and/or the fill level of the storage container (12).

4. Cooling device (22) according to claim 1, **characterised in that** a storage container (12) is provided between the condenser (7) and the superconductor to be cooled, being connected via a first line section (8) to the condenser (7) and via a second line section (11) to the superconductor to be cooled, wherein the pressure generation takes place in the storage container (12).

5. Cooling device (22) according to claim 4, **characterised in that** the second line section (11) is embodied as a riser pipe.

6. Cooling device (22) according to claim 4 or 5, **characterised in that** the second line section (11) is so embodied as to be at least sectionally flexible.

7. Cooling device (22) according to one of the preceding claims, **characterised in that** a valve, in particular a non-return valve (10), and/or a reservoir (23) is connected upstream of the storage container (12) at least on the condenser side.

8. Cooling device (22) according to one of the preceding claims, **characterised in that** the condenser (7) is so arranged as to be geodetically lower than the superconductor to be cooled.

9. Superconducting synchronous machine (1), in particular for use in airborne devices such as airplanes and helicopters, on seagoing vehicles or on traction vehicles, having a cooling device according to one of the preceding claims.

## Revendications

1. Dispositif (22) de refroidissement d'un supraconducteur, notamment d'un supraconducteur à haute température d'une machine (1) synchrone, comprenant un circuit de refroidissement pour un fluide de refroidissement, le fluide de refroidissement, liquéfié dans une tête (6) froide par un condenseur (7), étant conduit au supraconducteur à refroidir et retourné sous forme gazeuse au condenseur (7), dans lequel, pour véhiculer le fluide de refroidissement d'un récipient d'accumulation (12) au supraconducteur à refroidir, on soumet le fluide de refroidissement à une pression, **caractérisé en ce que** la pression dans le récipient d'accumulation (12) est produite par un ressort (19) mécanique, ou par un ressort de compression de gaz, sur un piston (15), qui met le fluide de refroidissement sous pression, un dispositif (21) de commande réglant l'établissement et le contrôle de la pression et s'en remettant à cet effet à des données de sonde (16, 17) de température, à des capteurs (13, 14) de position et à des capteurs de niveau dans le récipient d'accumulation (12).

2. Dispositif (22) de refroidissement suivant la revendication 1, **caractérisé en ce que** l'établissement de la pression dans le réservoir s'effectue de manière cyclique.

3. Dispositif (22) de refroidissement suivant l'une des revendications précédentes, **caractérisé en ce que** la pression dans le récipient d'accumulation (12) est réglable à l'aide de la température du supraconducteur et/ou du niveau du récipient d'accumulation (12).

4. Dispositif (22) de refroidissement suivant la revendication 1, **caractérisé en ce qu'**il est prévu, entre le condenseur (7) et le supraconducteur à refroidir, un récipient d'accumulation (12), qui communique, par un premier tronçon (8) de conduit, avec le condenseur (7) et par un deuxième tronçon (11) de conduit, avec le supraconducteur à refroidir, la production de la pression s'effectuant dans le récipient d'accumulation (12).

5. Dispositif (22) de refroidissement suivant la revendication 4, **caractérisé en ce que** le deuxième tronçon (11) de conduit est réalisé sous la forme d'un tuyau montant.

6. Dispositif (22) de refroidissement suivant la revendication 4 ou 5, **caractérisé en ce que** le deuxième tronçon (11) de conduit est réalisé souple au moins par tronçon.

7. Dispositif (22) de refroidissement suivant l'une des revendications précédentes, **caractérisé en ce qu'**en amont du récipient d'accumulation (12) est montée au moins une soupape en technique d'écoulement du côté du condenseur, notamment un clapet (10) anti-retour et/ou un réservoir (23).

8. Dispositif (22) de refroidissement suivant l'une des revendications précédentes, **caractérisé en ce que** le condenseur (7) est monté plus bas géodésiquement que le supraconducteur à refroidir.

9. Machine (1) synchrone supraconductrice, à utiliser notamment dans des matériels aériens comme des avions et des hélicoptères, sur des bâtiments de navigation sur mer et/ou sur des véhicules de traction, ayant un dispositif de refroidissement suivant l'une des revendications précédentes.
